# EUROPÄISCHE PATENTSCHRIFT

(11) **EP 1 049 601 B1**
(45) Veröffentlichungstag und Bekanntmachung des Hinweises auf die Patenterteilung: **08.05.2002**
(21) Anmeldenummer: 99903641.1
(22) Anmeldetag: 18.01.1999
(51) Int. Cl.: B60L 13/10

(54) **ANORDNUNG ZUM BETREIBEN EINES TRANSPORTSYSTEMS MIT EINEM SCHIENENGEFÜHRTEN MAGNETISCHEN SCHWEBEFAHRZEUG**
ARRANGEMENT FOR OPERATING A TRANSPORTATION SYSTEM WITH A TRACK-BOUND MAGNETIC LEVITATION VEHICLE
CONFIGURATION DESTINEE AU FONCTIONNEMENT D'UN SYSTEME DE TRANSPORT DOTE D'UN VEHICULE A SUSTENTATION MAGNETIQUE GUIDE

(30) Priorität: 19.01.1998 DE 19801586
(43) Veröffentlichungstag der Anmeldung: 08.11.2000
(73) Patentinhaber: Alstom Anlagen- und Automatisierungstechnik GmbH, 60528 Frankfurt (Main) (DE)
(72) Erfinder: GRÖNING, Ingolf, D-52074 Aachen (DE); HENNEBERGER, Gerhard, D-52074 Aachen (DE); KLITTICH, Manfred, D-65760 Eschborn (DE); WUNDERLICH, Horst, D-72184 Eutingen (DE); SEELIG, Anton, D-65439 Flörsheim (DE)
(74) Vertreter: Dreiss, Fuhlendorf, Steimle & Becker
(86) Internationale Anmeldenummer: EP9900259
(87) Internationale Veröffentlichungsnummer: WO9936287

(56) Entgegenhaltungen:
- EP-A- 0 179 188
- EP-A- 0 335 719
- PATENT ABSTRACTS OF JAPAN vol. 13, no. 528 (M-898), 24. November 1989 & JP 01 215662 A (RAILWAY TECHNICAL RESEARCH INSTITUTE), 29. August 1989
- PATENT ABSTRACTS OF JAPAN vol. 12, no. 195 (M-705), 7. Juni 1988 & JP 63 001305 A (HSST:KK), 6. Januar 1988

## Beschreibung

Die Erfindung betrifft eine Anordnung zum Betreiben eines Transportsystems mit einem schienengeführten magnetischen Schwebefahrzeug gemäß dem Oberbegriff des unabhängigen Anpruchs. Eine derartige Anordnung ist aus der EP-A-335 719 bekannt.

Die Magnetschwebetechnik ermöglicht die berührungslose und damit verschleissfreie Lagerung sowohl von linear bewegten als auch von rotierenden Teilen. Während die Anwendung der Magnetschwebetechnik im Bereich des Personentransports meist auf den Ersatz des Rad-Schiene-Kontaktes bei hohen Geschwindigkeiten abzielt, sind im Bereich der Fördertechnik der fehlende Abrieb, die geringe Geräuschentwicklung und der reduzierte Verschleiss von besonderer Bedeutung. Damit eignet sich ein solches Fördersystem für den Einsatz in der Umgebung von Personen, bei Anwendungen mit hohen hygienischen Anforderungen, z.B. in der Nahrungsmittel-, Pharma- und Medizinindustrie, und für den Einsatz in hochreinen oder explosionsgefährdeten Räumen. Auch die Relation von transportierter Last zum Leergewicht des Fahrzeugs hat in der Fördertechnik einen höheren Stellenwert als beim Personentransprort.

Ein wichtiger Gesichtspunkt ist die zum Schweben eines Fahrzeugs benötigte Energie. Bei der Personenbeförderung kann diese aufgrund der hohen Geschwindigkeiten über die Antriebsleistung aufgebracht werden. Die Geschwindigkeiten in der Fördertechnik sind dazu mit wenigen Metern pro Sekunde jedoch zu gering. Daher muss die zum Schweben benötigte Energie auf dem Fahrzeug selbst bereitgestellt werden.

Aus der EP-A1 0 580 107 ist ein Magnetschwebe-Transportsystem bekannt, bei dem ein Schwebefahrzeug mittels einem Linearmotor auf einer Fahrspur vorangetrieben wird. Das System weist den Nachteil auf, dass die Anordnung voluminös und mechanisch aufwendig ist. Als weiterer Stand der Technik wird auf die WO-A-94/10003 verwiesen.

Der Erfindung liegt die Aufgabe zugrunde, eine Anordnung zum Betreiben eines Transportsystems mit einem magnetischen Schwebefahrzeug anzugeben, welches einen kompakten, platzsparenden und damit preisgünstigen Aufbau erlaubt.

Die Aufgabe wird durch die Merkmale des unabhängigen Anspruchs gelöst. Weiterführende und vorteilhafte Ausgestaltungen sind den weiteren Ansprüchen und der Beschreibung zu entnehmen.

Die Erfindung ermöglicht das Ersetzen von aufwendigen mechanischen Systemen durch berührungslose Systeme zur Energieübertragung und/oder zur Übertragung von Antriebskräften sowie Trag- und Seitenführungskräften insbesondere für ein Magnetschwebefahrzeug. Sie ermöglicht die Integration für ein berührungslos betriebenes mobiles System.

Die erfindungsgemäße Anordnung zum Betreiben eines Transportsystems mit magnetischem Schwebefahrzeug weist ein integriertes Übertragungssystem mit Energieübertragungssystem zur induktiven Übertragung elektrischer Leistung, Linearmotor zur Übertragung einer Antriebsleistung und magnetischem Schwebesystem zur Übertragung von Trag- und/oder Seitenführungskräften auf. Die Anordnung weist den Vorteil auf, dass für einzelne Bestandteile im integrierten Übertragungssystem ähnliche Bedingungen für ein dynamisches Verhalten im Fahrbetrieb und ähnliche Bedingungen hinsichtlich mechanischer Luftspalte bei Magneten bzw. mechanischer Toleranzen gelten. Die konstruktive Gestaltung ist vorteilhaft einfach, insbesondere ist ein modularer Aufbau eines integrierten Übertragungssystems gemäß der Erfindung möglich. Weiterhin vorteilhaft ist die einfache Montage der Teilsysteme, die Vereinfachung etwaiger elektrischer Anschlüsse und Anschlusstechniken, der vereinfachte Wartungsaufwand bei etwaigem Komponententausch.

Gemäß der Erfindung sind aktive, geregelte Teilsysteme des magnetischen Schwebesystems und des Linearmotors auf oder an dem mobilen Schwebefahrzeug angeordnet, wobei vorzugsweise mittels Energieübertrager übertragene elektrische Leistung und etwaige Informationsverarbeitung mittels einer Steuereinheit genutzt wird. Der Vorteil besteht darin, dass ein individueller Fahrbetrieb eines jeden mobilen Systems an jedem Ort der Fahrstrecke zu jedem Zeitpunkt ermöglicht ist. Besonders vorteilhaft ist, dass ein unabhängiger Betrieb mehrerer mobiler Systeme über derselben Fahrstrecke und/oder demselben Fahrstreckenabschnitt möglich ist.

Die Erfindung sieht vor, dass das magnetische Schwebesystem einen regelbaren mechanischen Luftspalt aufweist. Bevorzugt ist eine Regelung in Richtung der wirkenden Normalkraft, insbesondere in der y-Koordinate, vorgesehen. Der Vorteil der Maßnahme liegt in einem erheblich verringerten Verschleiss sowie der Möglichkeit, mechanische Tragelemente lediglich als Fang- und/oder Hilfseinrichtung für das mobile Schwebefahrzueug auszugestalten.

Erfindungsgemäß sind Mittel, welche zum Regeln eines mechanischen Luftspalts des magnetischen Schwebesystems vorgesehen sind, gleichzeitig zum Regeln eines mechanischen Luftspalts von Linearmotor und/oder Energieübertragungssystem vorgesehen. Die vorteilhafte Kombination ermöglicht berührungslose Übertragungssysteme mit minimierten Luftspalt. Dies hat zur Folge, dass Gewicht und Abmessungen der einzelnen Übertragungssysteme des integrierten Übertragungssystems bei im Wesentlichen vergleichbaren Leistungsdaten reduziert werden Können gegenüber bekannten Lösungen. Bei gleichen Abmessungen und Massen können dementsprechend übertragbare Leistung und/oder Antriebskraft vorteilhaft erhöht werden.

In einem bevorzugten Ausführungsbeispiel ist das Übertragungssystem an äußeren Ecken des mobilen Systems, insbesondere des Schwebefahrzeugs angeordnet. Der Vorteil liegt in einer symmetrischen Anordnung des Übertragungssystems, so dass ein mobiles System flexibel einsetzbar ist, insbesondere gelten vergleichbare Bedingungen für Vorwärts- und Rückwärtsfahrt. Dies vereinfacht eine Umkehr der Fahrtrichtung des Schwebefahrzeugs.

Besonders günstig ist, ein Drehgestell zur Aufnahme des Übertragungssystems vorzusehen. Bevorzugt ist dabei die Anordnung des integrierten Übertragungssystems jeweils an zwei außenliegenden Seiten von mit einem Fahrzeugkasten verbundenen Drehgestellen wobei die Drehgestelle bevorzugt über ein Gelenk mit dem Fahrzeugkasten verbunden sind und das Gelenk jeweils um eine bezüglich der Fahrtrichtung vertikale Achse drehbar ist. Besonders zweckmäßig ist eine Anordnung von je einem Drehgestell vor und hinter dem Fahrzeugkasten in Fahrtrichtung. Günstig ist, das Übertragungssystem an zwei Stirnseiten des mit einem Fahrzeugkasten des Schwebefahrzeugs verbundenen Drehgestells anzuordnen. Eine günstige Anordnung besteht darin, dass ein Kugelgelenk zwischen Drehgestell und Fahrzeugkasten vorgesehen ist. Damit gelingt es, besonderes geringe Kurvenradien in vertikaler Ebene zu verwirklichen. Vorteilhaft ist dies für die Verwendung des erfindungsgemäßen Transportsystems für den Betrieb in Steigungs- und Gefällstrecken.

Eine günstige Weiterbildung der erfindungsgemäßen Anordnung sieht vor, dass das bewegbare Teilsystem des magnetischen Schwebesystems, insbesonderere das Schwebefahrzeug, in Verbindung mit dem Drehgestell mit Kugelgelenk zwei unabhängige, regelbare Einzelmagnete aufweist. Damit ist ein günstiges dynamisches Fahrverhalten insbesondere im Kurvenbereich möglich.

In einer weiteren günstigen Weiterbildung der erfindungsgemäßen Anordnung weist das Übertragungssystem mit dem Schwebefahrzeug festverbundene Übertragerköpfe auf, die zu Außenseiten des Schwebefahrzeugs hin U-förmig ausgebildet sind, so dass die Schenkel der U-Form vertikal übereinander liegen und nach außen weisen. Besonders vorteilhaft ist, wenn die U-Form-Profile in Profile von stationär angeordneten Teilen des Übertragungssystems hineinragen. Dies ermöglicht besonders vorteilhaft den Einsatz von passiven Weichen im Fahrbetrieb des Transportsystems.

In einer besonders vorteilhaften Weiterbildung der erfindungsgemäßen Anordnung ist der Linearmotor so am Schwebefahrzeug angeordnet, dass der Schwerpunkt des Linearmotors und der Schwerpunkt des gesamten Übertragungssystems, inbesondere unter Berücksichtigung einer Lastmasse etwa in einer Ebene (x-z-Ebene) parallel der Bewegungsrichtung des Schwebefahrzeugs liegen. Damit ist vorteilhaft der Einfluss von Störmomenten beim Beschleunigen und Verzögern des Schwebefahrzeugs durch einen minimierten Hebelarm in Verbindung mit der Wirkung der Antriebskraft erzielt.

Günstig ist eine Anordnung des magnetischen Schwebesystems am mobilen System und im integrierten Übertragunssystem derart, dass die Luftspaltebene (y-Koordinate) des magnetischen Schwebesystems oberhalb des Schwerpunktes des vollständigen mobilen Systems des Übertragungssystems unter Berücksichtigung einer typischen Lastmasse liegt. Damit wird vorteilhaft das Verhalten eines aufrechtstehenden Pendels mit labilem Gleichgewicht für das Transportsystem vermieden.

Vorteilhaft ist es, das magnetische Schwebesystem, Linearmotor und Energieübertrager jeweils vertikal übereinander anzuordnen. Damit ist im wesentlichen eine optimale Anordnung mit minimierten Störmomenten durch die Antriebskraft unter Vermeidung eines unerwünschten Pendelverhaltens mit labilem Gleichgewicht und/oder die Erzielung einer minimalen Bauhöhe der Anordnung erreicht. Besonders vorteilhaft ist, wenn zusätzlich die Übertragerköpfe kompakt ohne mechanischen Abstand angeordnet sind. Dadurch kann eine sonst notwendige konstruktionsbedingte große Bauhöhe der Anordnung vermieden werden.

Eine weitere günstige Weiterbildung gemäß der Erfindung sieht vor, Energieübertrager, magnetisches Schwebesystem und Linearmotor jeweils vertikal übereinander und stationäre Teile von Energieübertrager und magnetischem Schwebesystem einerseits und Übertragerköpfe von Schwebesystem und Linearmotor andererseits unmittelbar benachbart anzuordnen. Der Vorteil ist darin zu sehen, daß wiederum eine günstige geringe Bauhöhe erzielbar ist.

Vorteilhaft ist auch daß das magnetische Schwebesystem einen Magneten mit einem Rückschlußjoch aufweist, wobei sowohl Magnet als auch das Rückschlußjoch einen U-förmigen Querschnitt aufweisen, wobei die Schenkel der U-förmigen Profile einander zugewandt sind. Der Vorteil dieser Anordnung liegt in einer wirksamen Seitenführungskraft, welche durch die Profilgebung erzielt wird. Das mobile System wird dadurch stabilisiert.

Eine weitere vorteilhafte Ausgestaltung besteht darin, daß das integrierte Übertragungssystem ein mechanisches Führungssystem aufweist, welches zur Richtungssteuerung in einer passiven Weiche in der Fahrspur des Transportsystems vorgesehen ist. Vorzugsweise ist eine seitliche Spurführung durch ein Rollenpaar des mechanischen Führungssystems vorgesehen, wobei das Rollenpaar in die Nut eingreift, welche von dem U-förmigen Rückschlußjoch des magnetischen Schwebesystems gebildet wird. Das Rollenpaar befindet sich bevorzugt an dem Drehgestell des mobilen Schwebefahrzeugs und kann entweder paarweise vor oder hinter der Montageposition der Übertragerköpfe (z-Koordinate) angeordnet sein oder aber je eine Rolle eines Paares vor und hinter der Montageposition der Übertragerköpfe.

In einer weiteren vorteilhaften Ausführung sind Magnete des Schwebesystems paarweise und gegenüberliegend angeordnet, wobei bevorzugt ein bewegbares, am Schwebefahrzeug befestigtes Teil eines Übertragerkopfes ein stationär angeordnetes Teil Energieübertragers übergreift.

Vorteilhaft ist, Mittel vorzusehen, die eine Regelung des Luftspaltes des magnetischen Schwebesystems auf einen veränderlichen Wert für den Luftspalt ermöglichen, so daß Normalkräfte des Linearmotors als Unterstützung für das Schweben mit in die Regelung einbezogen sind. Dies wird vorteilhaft durch die doppelseitige Ausführung des magnetischen Schwebesystems ermöglicht, da das Einstellen von Kräften in positiver und negativer Richtung (y-Koordinate) möglich ist. Damit ist besonders die Minimierung von Verlusten und eine Minimierung des Energiebedarfs des Systems möglich.

Günstig ist die Ausführung des magnetischen Schwebesystems dergestalt, daß Mittel vorgesehen sind, die eine senkrecht zur Fahrtrichtung des Schwebefahrzeugs verlaufende Flußführung des Magnetflusses ermöglichen. Dies ermöglicht vorteilhaft eine Verringerung von Wirbelstromverlusten und eine Steigerung von günstigen Seitenführungskräften.

Die Erfindung ist im folgenden anhand von Ausführungsbeispielen in Figuren näher beschrieben.

Es zeigen
- Fig. 1: eine Anordnung gemäß der Erfindung in Draufsicht und eine Detailansicht,
- Fig. 2: eine Detailansicht von zwei Gelenkanordnungen,
- Fig. 3: zwei Anordnungen für Magnete,
- Fig. 4: verschiedene Ausführungen von Tragmagneten,
- Fig. 5: eine günstige Anordnung von Schwerpunkten,
- Fig. 6: eine Detailansicht einer Ausführungsform des integrierten Übertragersystems,
- Fig. 7: ein Schwebefahrzeug mit Führungseinrichtung.

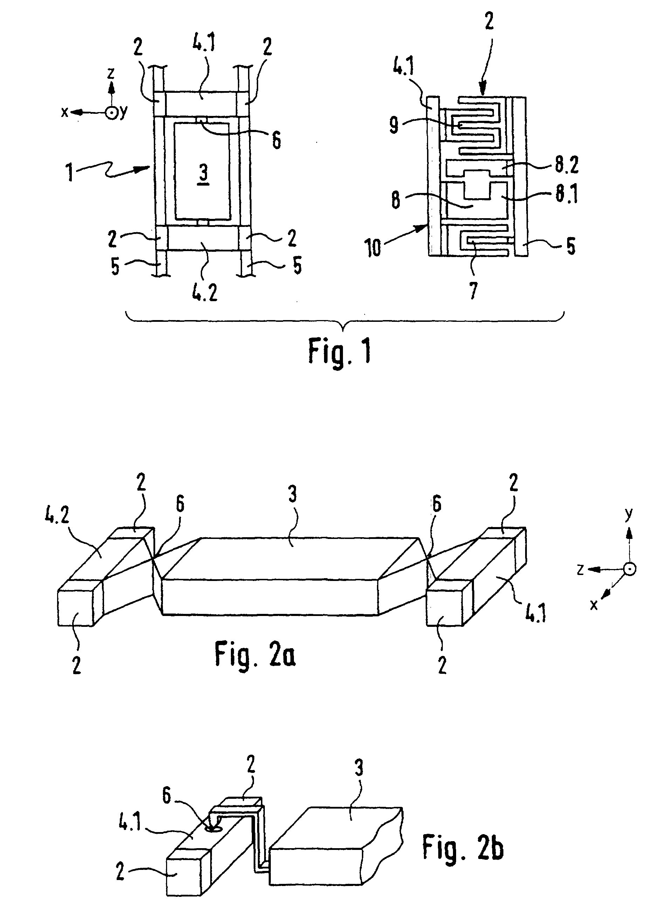

In Fig. 1 ist die Anordnung eines erfindungsgemäßen Transportsystems mit integrierten Übertragungssystemen dargestellt. Ein Schwebefahrzeug wird dabei mittels berührungslos arbeitenden Linearmotoren angetrieben und über ein induktives Übertragungssystem berührungslos mit elektrischer Energie versorgt. Ein bevorzugtes integriertes Übertragungssystem besteht aus einem berührungslos arbeitenden Energieübertragungssystem zur induktiven Übertragung elektrischer Leistung, einem Linearmotor zur Übertragung der Antriebskraft und einem magnetischen Schwebesystem, dessen mobiles Teilsystem das Schwebefahrzeug ist und welches stationäre Teile in der Fahrspur aufweist.

In der linken Bildhälfte ist in der Draufsicht auf ein Transportsystem 1 mit vier integrierten Übertragungssystemen 2 ein Fahrzeugkasten 3 mit einem vorderen Drehgestell 4.1 und hinteren Drehgestell 4.2 zu sehen, welche an einem Schwebefahrzeug angeordnet sind, das sich entlang einer Schiene 5 bewegt. Details des Schwebefahrzeugs sind nicht dargestellt. Das Drehgestell 4.1, 4.2 ist jeweils über ein Gelenk 6 mit dem Fahrzeugkasten 3 verbunden. Symmetrisch an allen vier Ecken des Fahrzeugs ist jeweils ein integriertes Übertragungssystem 2 an den seitlichen Enden der Drehgestelle 4.1, 4.2 angeordnet. Das Fahrzeug kann sich entlang der z-Koordinate bewegen. Das Gelenk 6 kann im einfachsten Fall ein Bolzen sein, der eine vorzugsweise durch Anschlagsstücke begrenzte Verdrehung in horizontaler Richtung, d.h. eine Drehung um die y-Achse, zuläßt. Eine Verdrehung in vertikaler Richtung wird unterbunden, und es wird gewährleistet, daß die Drehgestelle 4.1, 4.2 und der Fahrzeugkasten 3 im wesentlichen in einer Ebene liegen. Eine weitere günstige Ausbildung eines Gelenks 6 ist ein Kugelgelenk, welches Verdrehungen in horizontaler, vertikaler und azimutaler Richtung zuläßt. Diese Verdrehungen lassen sich durch Anschlagsstücke unabhängig voneinander begrenzen. Günstig für eine Kurventauglichkeit in vertikaler Richtung sind sowohl der Luftspalt zwischen Drehgestell und Fahrzeugkasten als auch die sogen. steife Länge des Gelenks.

Die Detailansicht auf der rechten Seite der Fig. 1 zeigt die Einzelheiten eines integrierten Übertragungssystems 2 im Querschnitt. Rechts ist ein Teil der Schiene 5 zu sehen, links ein Drehgestell. 4.1, 4.2. Das untere Element stellt einen Linearmotor 7 dar, über dem ein Tragmagnetsystem 8 angeordnet, über diesem ist ein Energieübertragerkopf 9 angeordnet. Linearmotor 7, Tragmagnetsystem 8 und Übertragerkopf 9 weisen dabei jeweils eine an der Schiene 5 angeordnete stationäre Komponente und eine am mobilen System über die Drehgestelle 4.1, 4.2 verbundene mobile Komponente auf. Dabei weisen die mobilen Komponenten der Übertragerköpfe 9 ein U-förmiges Profil auf, welche in das E-förmige Profil des stationären Gegenstücks hineinragen. Das Tragmagnetsystem 8 weist ein Unterteil 8.1 und ein Rückschlußjoch 8.2 auf, welche beide jeweils U-förmig ausgebildet sind und deren Profilschenkel zueinander gerichtet sind. Der Linearmotor 7 weist am mobilen Teil ein U-förmiges Profil auf, das das Profil auf der stationären Seite übergreift. Der Aufbau des integrierten Übertragungssystems 2 ist sehr kompakt und erlaubt vorteilhaft eine Verwendung von passiven Weichen im System.

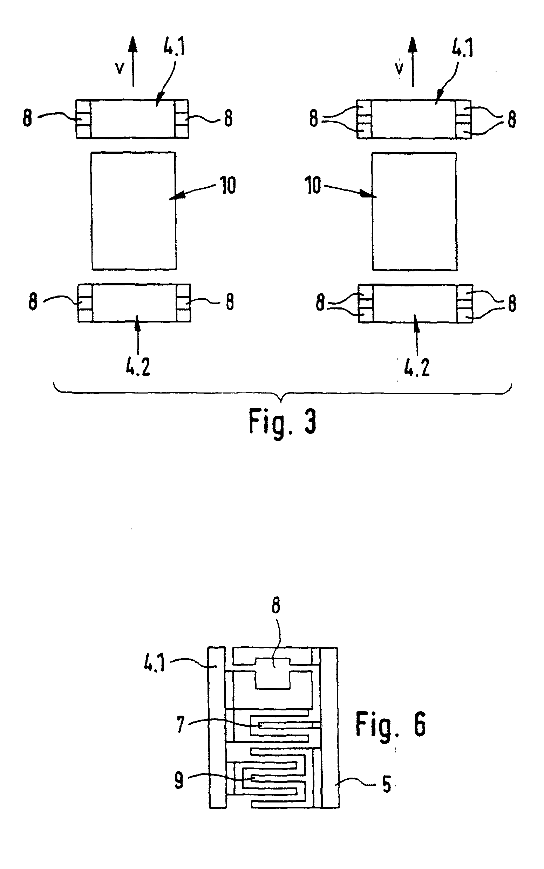

In Fig. 2 sind zwei Ausführungen eines Gelenks 6 skizziert. Im oberen Teil der Abbildung ist je ein Bolzengelenk zwischen dem Drehgestell 4.1,4.2 zu beiden Seiten des Fahrzeugkastens 3 dargestellt, im unteren Teil ist ein Kugelgelenk zwischen einem Drehgestell 4.1 oder 4.2 und dem Fahrzeugkasten 3 dargestellt. Aus Stabilitätsgründen und wegen der größeren Zahl an Freiheitsgraden bedingt das Kugelgelenk eine 2-Magnetanordnung des Tragmagneten 8, da ein Verkippen des Drehgestells 4.1, 4.2 in vertikaler Richtung , beispielsweise beim Beschleunigen des Fahrzeugs, durch eine 1-Magnetanordnung nicht zu verhindern ist. Die Anordnung mit einem Bolzengelenk dagegen kann aus Kostengründen nur mit einer 1-Magnetanordnung ausgeführt werden. Die Steifigkeit des Fahrzeugs ist zur Stabilisierung dabei ausreichend. Es ist jedoch auch eine Anordnung mit 2-Magnetanordnung möglich.

In Fig. 3 ist die 1-Magnet- und die 2-Magnetanordnung des Tragmagneten in Draufsicht näher erläutert. In der linken Bildhälfte ist eine 1-Magnetanordnung abgebildet, wie sie in Verbindung mit einem Bolzengelenk 6 zwischen einem Drehgestell 4.1, 4.2 und einem Fahrzeugkasten 3 günstig ist. Das Schwebefahrzeug 10 weist dabei vier Trageinheiten mit Tragmagneten 8 auf, die aus jeweils einem Tragmagneten mit Unterteil 8.1 und Rückschlußjoch 8.2 aufgebaut sind. Sie sind an den seitlichen Enden der Drehgestelle 4.1, 4.2 angeordnet. In der rechten Bildhälfte ist eine 2-Magnetanordnung abgebildet. Die Magnete sind dabei jeweils Bestandteil des integrierten Übertragungssystems 2. Vorzugsweise weist jeder Magnet 8 einen eigenen Luftspaltsensor zur Bestimmung der Luftspaltgröße und einen eigenen Stromsteller auf.

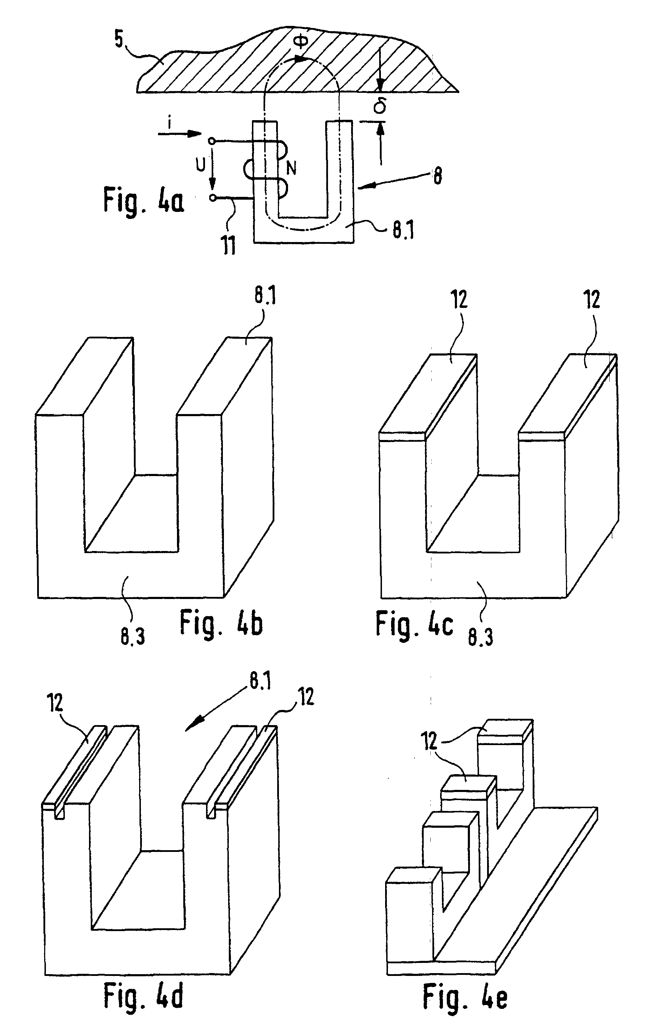

In Fig. 4 sind vorteilhafte Ausgestaltungen des Tragmagneten 8 dargestellt. Ein günstiger Tragmagnet 8 ist ein Elektromagnet, wie er in Fig. 4a abgebildet ist. Bei diesem Schwebeprinzip wird die Anziehung eines Elektromagneten an einen ferromagnetischen Rückschluß, der in der Figur durch die Schiene 5 gebildet ist, ausgenutzt. Die Erregung des Elektromagneten erfolgt durch stromdurchflossene Spulen. Da diese Anordnung instabil ist, muß der Luftspalt mit Luftspaltsensoren gemessen werden und durch geeignete Spulenströme stabilisiert werden. Ein weiterer günstiger Tragmagnet 8 wird durch einen Hybridmagneten gebildet. In dieser Anordnung wird die Grunderregung von Dauermagneten übernommen, die mit einem Elektromagneten verbunden sind. Dies erlaubt ein energiesparendes magnetisches Schweben eines Fahrzeugs.

Grundsätzlich kann ein Fahrzeug über mechanische Kräfte bzw. über entsprechende Konstruktionselemente wie Rollen, Kufen oder über Magnetkräfte in einer Spur geführt werden. Dabei ist sowohl aktive als auch passive Führung möglich.

Bei einer aktiven elektromagnetischen Führung werden neben den Tragmagneten 8 noch weitere Elektromagnete eingesetzt, die das Fahrzeug in der Spur an oder zwischen Führungsschienen halten. Dazu werden bevorzugt die seitlichen Abstände zu den Führungsschienen gemessen und die Führungsmagnete entsprechend geregelt.

Eine gewichtsparende und kostengünstige Alternative ist die passive Führung. Wird ein Elektromagnet, welcher unter einer Schiene schwebt, seitlich ausgelenkt, so entsteht eine Kraft, die ihn in die Mittellage zurückzieht. Dieses Prinzip ist als Reluktanz bekannt, es entstehen dabei schwach gedämpfte Schwingungen. Ein Schwebefahrzeug kann vorteilhaft durch Reluktanzkräfte geführt werden, wobei seitliche Bewegungen möglich sind. Um einen stabilen Betrieb zu ermöglichen, werden seitliche Bewegungsmöglichkeiten begrenzt, vorzugsweise durch Anschlagrollen. Da diese Anschlagsrollen im Gegensatz zu mechanischen Führungsrollen nicht ständig benutzt werden, können diese leichter ausgelegt werden. Besonders günstig ist es, zur Erhöhung der Reluktanzkräfte die Tragschiene mit einer Nut in Fahrtrichtung zu versehen, womit sich die seitlichen Rückstellkräfte erhöhen, insbesondere in etwa verdoppeln.

In Fig. 4b ist ein Elektromagnet als Unterteil 8.1 des Tragmagneten 8 dargestellt. Er weist U-förmiges Joch 8.3 auf, um beide Schenkel des Jochs werden Erregerspulen 11 gewickelt. Die Erregerspulen sind nicht dargestellt. Da die Kraft nur vom Betrag des Spulenstroms abhängt, ist zum Betrieb ein 2-Quadrantensteller ausreichend.

In Fig. 4c ist ein Hybridmagnet abgebildet. Bei dieser Ausführung wird auf die Polflächen des Jochs 8.3 des Elektromagneten ein Permanentmagnet-Material 12 aufgebracht, wobei die Schenkel des Jochs 8.3 wiederum die Erregerspulen 11, die nicht dargestellt sind, tragen. Die Dicke der Permanentmagnete wird vorzugsweise so ausgelegt, daß der Hybridmagnet für einen vorgegebenen Luftspalt zwischen Polfläche und Rückschluß eine vorgegebene Kraft aufbringt, ohne daß ein Strom durch die Erregerwicklung 11 fließt. Zur Veränderung der resultierenden Kraft wird der Hybridmagnet entweder durch Stromfluß durch die Erregerspulen 11 zusätzlich erregt oder entregt. Hierzu ist ein Vierquadrantensteller vorteilhaft.

In Fig. 4d ist eine weitere günstige Ausgestaltung eines Tragmagneten 8 dargestellt. Der Vorteil eines Elektromagneten in Form eines geringen magnetisch wirksamen Luftspalts und eines Hybridmagneten in Form einer Kraft ohne Stromfluß läßt sich mit einem sogen. Kombihybridmagneten nutzen. Die Polflächen eines Jochs 8.3 eines Elektromagneten werden nur teilweise mit Permanentmagnet-Material 12 belegt. In der Figur ist das Permanentmagnet-Material 12 an den Außenbereichen der Polflächen parallel zur Nut des Jochs 8.3 aufgetragen. Da das Permanentmagnet-Material 12 an zwei Seiten das elektrisch leitfähige Joch 8.3 berührt, kommt es dort zu magnetischen Kurzschlüssen. Zur Reduzierung dieser Kurzschlüsse ist es zweckmäßig, eine zusätzliche Nut in die Polfläche parallel zum Permanentmagnet-Material 12 anzubringen. Je nach Auslegung der Permanentmagnete 12 kann ein 2-Quadrantensteller zum Speisen des Elektromagneten ausreichend sein.

Eine weitere günstige Ausgestaltung eines Tragmagneten 8 ist in Fig. 4e in Form einer Zwei-Kreis-Anordnung dargestellt. Das Tragsystem 8 wird jeweils aus einem Elektromagneten und einem Permanentmagneten zusammengesetzt, die mechanisch hintereinander oder nebeneinander angeordnet sind.

Bei allen Anordnungen wird vorteilhafterweise ein Rückschlußjoch 8.2 eingesetzt, welches U-förmig ausgebildet ist. Zweckmäßigerweise wird das zugehörige Streckenelement der Fahrspur 5 mit einer Nut ausgeführt, die gleichzeitig die Seitenführungskräfte vorteilhaft erhöht. Das Streckenelement muß dabei denselben Fluß tragen wie ein Unterteil 8.1des Tragmagnetsystems 8. Vorteilhaft ist, das Rückschlußjoch 8. 2 aus geblechtem Eisen zu bilden, da so die Wirbelstromverluste verringert werden.

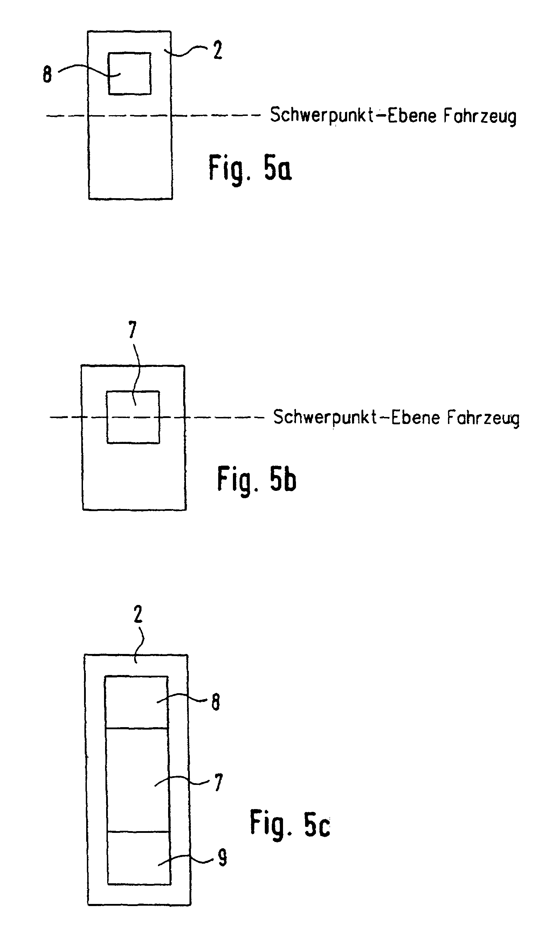

Um die Anordnung des Gesamtsystems möglichst stabil zu gestalten, ist es vorteilhaft, die Auslegung des Systems so vorzusehen, daß die Luftspaltebene des magnetischen Schwebesystems oberhalb des Schwerpunkts des vollständigen mobilen Systems liegt. Dies ist in Fig. 5a dargestellt. Vorteilhaft ist, die Wirkung einer typischen Lastmasse im Schwebefahrzeug mit einzubeziehen. In Fig. 5b ist eine günstige Anordnung des Schwerpunkts des Linearmotors 7 dargestellt. Es ist vorteilhaft, wenn der Schwerpunkt des Linearmotors 7 in etwa in derselben Ebene wie der Schwerpunkt des integrierten Übertragungssystems liegt. Das System ist dann besonders stabil.

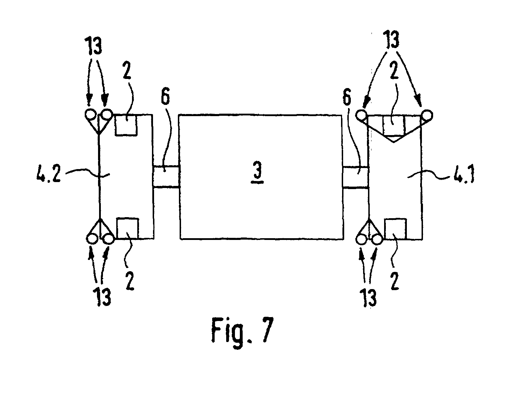

In Fig. 6 ist eine besonders kompakte Anordnung des integrierten Übertragungssystems 2 dargestellt. Die Reihenfolge der einzelnen Übertragungssysteme sind hier gegenüber dem Ausführungsbeispiel in Fig. 1 geändert. Hier ist der Energieübertragerkopf 9 unten, der Linearmotor 7 in der Mitte und das magnetische Schwebesystem 8 oben im integrierten Übertragungssystem angeordnet.

Mit einer Ausführung des integrierten Übertragungssystems 2 gemäß Fig. 6 läßt sich eine günstige stabile Anordnung mit einer mechanischen Führung darstellen. Dies ist in Fig. 7 abgebildet. Trotz des Einsatzes eines magnetischen Tragsystems sind aus Sicherheitsgründen für das Drehgestell 4.1, 4.2 zusätzliche Rollen 13 vorteilhaft. Zum einen sind Rollen 13 an der Unterseite des Drehgestells 4.1, 4.2 vorgesehen, um passive Weichen durchfahren zu können. Diese Rollen 13 können gleichzeitig zum Auffangen des Fahrzeugs bei Stromausfall oder sonstigen Systemfehlern verwendet werden. Weiterhin können Rollen 13 an der Oberseite des Drehgestells 4.1, 4.2 vorgesehen sein, da wegen des Linearmotors 7 und bei Verwendung eines Hybridmagnet im Tragmagnetsystem 8 ein Absinken des Fahrzeugs bei Stromausfall nicht in jedem Lastfall möglich ist. Zum anderen sind Rollen 13 zum Durchfahren von Weichen günstig, da die Reibungskräfte der Rollen 13 größer sein können als die verbleibende Reluktanzkraft eines ausgelenkten Tragmagneten. Die Rollen können dann auch bei Kurvenfahrten zum Einsatz kommen, um mögliche Kurvengeschwindigkeiten zu erhöhen. An den Drehgestellen sind im Bereich der Übertragungssysteme 2 jeweils Rollen 13 seitlich an den Drehgestellen 4.1, 4.2 angebracht. Diese Ausführung ist besonders zur mechanischen Richtungssteuerung in einer passiven Weiche geeignet. Ein Rollenpaar 13 greift dabei in die Nut ein, die das U-förmige Rückschlußjoch 8.2 des magnetischen Schwebesystems darstellt. Die Anordnung der Rollen 13 kann dabei entweder paarweise vor oder hinter dem Fahrzeugkasten 3 oder je eine Rolle 13 vor und hinter dem Fahrzeugkasten 3 angeordnet sein.

Eine besonders günstige Flußführung des magnetischen Schwebesystems ist eine senkrechte Flußführung relativ zur Fahrtrichtung (z-Richtung). Die Art der Flußführung hat einen Einfluß auf die bei Bewegung in Fahrtrichtung entstehenden Wirbelstromverluste und auf die Trag- und Seitenführungskräfte des Systems. Da die Funktion des Tragens von Tragmagneten 8 vorrangig zu erfüllen ist und die Normalkraft größer als eine Reluktanzkraft ist, wird der Tragmagnet 8 vorzugsweise so ausgelegt, daß die Normalkraft des Magneten 8 trägt und die Reluktanzkraft zum Führen vorgesehen ist. Wird der magnetische Fluß senkrecht zur Bewegungsrichtung geführt (senkrechte Flußführung), so ergeben sich im Gegensatz zu einer Flußführung in Bewegungsrichtung (parallele Flußführung) Vorteile. Zum einen sind die Wirbelstromverluste im Rückschlußjoch 8.3 geringer als bei paralleler Flußführung, da bei vergleichbarer Verschiebung des Magneten 8 in Bewegungsrichtung die Flußänderung geringer ist. Zum anderen ist bei senkrechter Flußführung die aus der Schiene 5 herausragende Jochoberfläche durch seitliche Verschiebung des Jochs 8.2 größer als bei paralleler Flußführung. Diese größere Oberfläche ist mit der Änderung der magnetischen Feldenergi verknüpft, welche proportional zur Rückstellkraft bei seitlicher Verschiebung ist. Durch eine Nutung der Schiene 5 ist es zusätzlich möglich, die Seitenführungskräfte zu vergrößern.

## Patentansprüche

1. Anordnung zum Betreiben eines Transportsystems mit einem schienengeführten magnetischen Schwebefahrzeug (10), mit einem Linearmotor (7) zur Übertragung einer Antriebsleistung und mit einem magnetischen Schwebesystem (8, 8.1, 8.2, 8.3) zur Übertragung von Trag- und/oder Seitenführungskräften, wobei aktive, geregelte Teilsysteme des Schwebesystems (8, 8.1, 8.2, 8.3) auf oder an dem Schwebefahrzeug (10) angeordnet sind, und wobei Mittel zum Regeln eines mechanischen Luftspalts des Schwebesystems (8, 8.1, 8.2, 8.3) vorgesehen sind, **dadurch gekennzeichnet, daß** ein Energieübertragungssystem (9) zur induktiven Übertragung elektrischer Leistung vorgesehen ist, daß aktive, geregelte Teilsysteme des Linearmotors (7) auf oder an dem Schwebefahrzeug (10) angeordnet sind, daß das Energieübertragungssystem (9) die auf oder an dem Schwebefahrzeug (10) angeordneten Teilsysteme des Schwebesystems (8, 8.1, 8.2, 8.3) und des Linearmotors (7) mit elektrischer Leistung versorgt, und daß die Mittel, welche zum Regeln des mechanischen Luftspalts des Schwebesystems (8, 8.1, 8.2, 8.3) vorgesehen sind, gleichzeitig zum Regeln eines mechanischen Luftspalts des Linearmotors (7) und/oder des Energieübertragungssystems (9) vorgesehen sind.

2. Anordnung nach Anspruch 1,
**dadurch gekennzeichnet,**
**daß** das Übertragungssystem (2) an äußeren Ecken des Schwebefahrzeugs (10) angeordnet ist.

3. Anordnung nach Anspruch 1 oder 2,
**dadurch gekennzeichnet,**
**daß** ein Drehgestell (4.1, 4.2) zur Aufnahme des Übertragungssystems (2) vorgesehen ist.

4. Anordnung nach mindestens einem der Ansprüche 1 bis 3,
**dadurch gekennzeichnet,**
**daß** ein Gelenk (6) zwischen Drehgestell (4.1, 4.2) und einem Fahrzeugkasten (3) vorgesehen ist.

5. Anordnung nach mindestens einem der Ansprüche 1 bis 4,
**dadurch gekennzeichnet,**
**daß** das Übertragungssystem (2) an außenliegenden Seiten eines mit einem Fahrzeugkasten (3) des Schwebefahrzeugs (10) verbundenen Drehgestells (4.1, 4.2) angeordnet ist.

6. Anordnung nach mindestens einem der Ansprüche 1 bis 5,
**dadurch gekennzeichnet,**
**daß** das Übertragungssystem (2) an zwei seitlichen Stirnseiten eines mit einem Fahrzeugkasten (3) des Schwebefahrzeugs (10) verbundenen Drehgestells (4.1, 4.2) angeordnet ist.

7. Anordnung nach mindestens einem der Ansprüche 1 bis 6,
**dadurch gekennzeichnet,**
**daß** Drehgestelle (4.1, 4.2) in Fahrtrichtung des Schwebefahrzeugs (10) vor und hinter einem Fahrzeugkasten (3) des Schwebefahrzeugs (10) angeordnet sind.

8. Anordnung nach mindestens einem der Ansprüche 1 bis 7,
**dadurch gekennzeichnet,**
**daß** ein bewegbares Teilsystem (8.1, 8.2) des Schwebesystems (8, 8.1, 8.2, 8.3) zwei unabhängige, regelbare Einzelmagnete (8.1, 11) zum Aufbringen der Tragkraft aufweist.

9. Anordnung nach mindestens einem der Ansprüche 1 bis 8,
**dadurch gekennzeichnet,**
**daß** das Übertragungssystem (2) mit dem Schwebefahrzeug (10) fest verbundene Übertragerköpfe (9) aufweist, die an Außenseiten des Schwebefahrzeugs (10) U-förmig ausgebildet sind, so daß die Schenkel der U-Form vertikal übereinander liegen und nach außen weisen.

10. Anordnung nach mindestens einem der Ansprüche 1 bis 9,
**dadurch gekennzeichnet,**
**daß** Profile von Übertragerköpfen (9) von mit dem Schwebefahrzeug (10) fest verbundenen Teilen des Übertragungssystems (2) in Profile von stationär angeordneten Teilen des Übertragungssystems (2) hineinragen.

11. Anordnung nach mindestens einem der Ansprüche 1 bis 10,
**dadurch gekennzeichnet,**
**daß** der Linearmotors (7) so am Übertragungssystem (2) angeordnet ist, daß der Schwerpunkt des Linearmotors (7) und der Schwerpunkt des gesamten Übertragungssystems (2) etwa in einer Ebene parallel einer Bewegungsrichtung des Schwebefahrzeugs (10) liegen.

12. Anordnung nach mindestens einem der Ansprüche 1 bis 11,
**dadurch gekennzeichnet,**
**daß** der Linearmotor (7) so am Schwebefahrzeug (10) angeordnet ist, daß der Schwerpunkt des Linearmotors (7) und der gemeinsame Schwerpunkt von Schwebefahrzeug (10), am Schwebefahrzeug (10) befestigten Teilen des Übertragungssystems (2) und einer Lastmasse etwa in einer Ebene parallel einer Bewegungsrichtung des Schwebefahrzeugs (10) liegen.

13. Anordnung nach mindestens einem der Ansprüche 1 bis 12,
**dadurch gekennzeichnet,**
**daß** eine Luftspaltebene des magnetischen Schwebesystems (8, 8.1, 8.2, 8.3) so in das Übertragungssystem (2) integriert ist, daß sie oberhalb des Schwerpunktes des Übertragungssystems (2) angeordnet ist.

14. Anordnung nach mindestens einem der Ansprüche 1 bis 13,
**dadurch gekennzeichnet,**
**daß** eine Luftspaltebene des magnetischen Schwebesystems (8, 8.1, 8.2, 8.3) so in das Übertragungssystem (2) integriert ist, daß sie oberhalb des gemeinsamen Schwerpunktes von Schwebefahrzeug (10) und am Schwebefahrzeug (10) befestigten Teilen von Übertragungssystem (2) und Linearmotor (7) angeordnet ist.

15. Anordnung nach mindestens einem der Ansprüche 1 bis 14,
**dadurch gekennzeichnet,**
**daß** das magnetische Schwebesystem (8, 8.1, 8.2, 8.3), Linearmotor (7) und Energieübertrager (9) jeweils vertikal übereinander angeordnet sind.

16. Anordnung nach mindestens einem der Ansprüche 1 bis 15,
**dadurch gekennzeichnet,**
**daß** das magnetische Schwebesystem (8, 8.1, 8.2, 8.3), Linearmotor (7) und Energieübertrager (9) jeweils vertikal übereinander angeordnet sind, wobei das Schwebesystem (8) über dem Linearmotor (7) angeordnet ist.

17. Anordnung nach mindestens einem der Ansprüche 1 bis 16,
**dadurch gekennzeichnet,**
**daß** die am Schwebefahrzeug (10) befestigten Teile von Schwebesystem (8) und Linearmotor (7) eng benachbart ohne mechanischen Abstand angeordnet sind.

18. Anordnung nach mindestens einem der Ansprüche 1 bis 17,
**dadurch gekennzeichnet,**
**daß** das magnetische Schwebesystem (8, 8.1, 8.2, 8.3), Linearmotor (7) und Energieübertrager (9) jeweils vertikal übereinander angeordnet sind, wobei das Schwebesystem (8) oben, der Linearmotor (7) in der Mitte und der Energieübertrager (9) unten angeordnet ist.

19. Anordnung nach mindestens einem der Ansprüche 1 bis 18,
**dadurch gekennzeichnet,**
**daß** in einer vertikalen Anordnung Energieübertrager (9) oben, magnetisches Schwebesystem (8, 8.1, 8.2, 8.3) in der Mitte und und Linearmotor (7) unten angeordnet sind, so daß stationäre Teile von Energieübertrager (9) und magnetischem Schwebesystem (8, 8.1, 8.2, 8.3) einerseits und am Schwebefahrzeug (10) befestigte Teile von Schwebesystem (8) und Linearmotor (7) andererseits eng benachbart ohne mechanischen Abstand angeordnet sind.

20. Anordnung nach mindestens einem der Ansprüche 1 bis 19,
**dadurch gekennzeichnet,**
**daß** das magnetische Schwebesystem (8, 8.1, 8.2, 8.3) einen Magneten (8.1) mit einem Joch (8.3) mit einem Rückschlußjoch (8.2) aufweist, wobei das Rückschlußjoch (8.2) einen U-förmigen Querschnitt aufweist, dessen Schenkel dem Magneten (8.1) zugewandt sind.

21. Anordnung nach mindestens einem der Ansprüche 1 bis 20,
**dadurch gekennzeichnet,**
**daß** das integrierte Übertragungssystem (2) ein Führungssystem (13) aufweist, welches zur Richtungssteuerung in einer passiven Weiche und/oder Seitenführung vorgesehen ist.

22. Anordnung nach mindestens einem der Ansprüche 1 bis 21,
**dadurch gekennzeichnet,**
**daß** das Führungssystem ein Rollenpaar (13) aufweist, wobei das Rollenpaar (13) in eine Nut eingreift, welche das U-förmige Rückschlußjoch (5, 8.2) darstellt,

23. Anordnung nach mindestens einem der Ansprüche 1 bis 22,
**dadurch gekennzeichnet,**
**daß** Magnete (8.1, 8.3) des Schwebesystems (8) paarweise und gegenüberliegend angeordnet sind.

24. Anordnung nach Anspruch 23,
**dadurch gekennzeichnet,**
**daß** ein am Schwebefahrzeug (10) befestigtes Teil des Schwebesystems (8) ein stationär an der Schiene (5) angeordnetes Teil des Schwebesystems (8) übergreift.

25. Anordnung nach mindestens einem der Ansprüche 1 bis 24,
**dadurch gekennzeichnet.**
**daß** Normalkräfte des Linearmotors (7) als Unterstützung für das Schweben vorgesehen und bei der Luftspaltregelung berücksichtigt sind.

26. Anordnung nach mindestens einem der Ansprüche 1 bis 25,
**dadurch gekennzeichnet,**
**daß** das Rückschlußjoch (8.2) zum am Schwebefahrzeug (10) befestigten Teil des Schwebesystems (8.1, 8.3) so ausgerichtet ist, daß der magnetische Fluß senkrecht zur Fahrtrichtung des Schwebefahrzeugs (10) geführt ist.

## Claims

1. An arrangement for operating a transport system with a rail-guided magnetic levitation vehicle (10), a linear motor (7) for the transmission of drive power and a magnetic levitation system (8, 8.1, 8.2, 8.3) for the transmission of support and/or lateral guide forces, wherein active, regulated sub-systems of the levitation system (8, 8.1, 8.2, 8.3) are arranged on or at the levitation vehicle (10), and wherein there are provided means for regulating a mechanical air gap in the levitation system (8, 8.1, 8.2, 8.3), **characterised in that** there is provided an energy transmission system (9) for the inductive transmission of electrical power, that active, regulated sub-systems of the linear motor (7) are arranged on or at the levitation vehicle (10), that the energy transmission system (9) supplies the sub-systems of the levitation system (8, 8.1, 8.2, 8.3) and the linear motor (7), which are arranged on or at the levitation vehicle (10), with electrical power, and that the means provided for regulating the mechanical air gap of the levitation system (8, 8.1, 8.2, 8.3) are provided at the same time for regulating a mechanical air gap of the linear motor (7) and/or the energy transmission system (9).

2. An arrangement according to claim 1 **characterised in that** the transmission system (2) is arranged at outer corners of the levitation vehicle (10).

3. An arrangement according to claim 1 or claim 2 **characterised in that** there is provided a bogie (4.1, 4.2) for accommodating the transmission system (2).

4. An arrangement according to at least one of claims 1 to 3 **characterised In that** a pivot (6) is provided between the bogie (4.1, 4.2) and a vehicle body (3).

5. An arrangement according to at least one of claims 1 to 4 **characterised in that** the transmission system (2) Is arranged at outwardly disposed sides of a bogie (4.1, 4.2) connected to a vehicle body (3) of the levitation vehicle (10).

6. An arrangement according to at least one of claims 1 to 5 **characterised in that** the transmission system (2) is arranged at two lateral ends of a bogie (4.1, 4.2) connected to a vehicle body (3) of the levitation vehicle (10).

7. An arrangement according to at least one of claims 1 to 6 **characterised in that** bogies (4.1, 4.2) are arranged in front of and behind a vehicle body (3) of the levitation vehicle (10) in the direction of travel of the levitation vehicle (10).

8. An arrangement according to at least one of claims 1 to 7 **characterised in that** a movable sub-system (8.1, 8.2) of the levitation system (8, 8.1, 8.2, 8.3) has two independent, regulatable individual magnets (8.1, 11) for applying the support force.

9. An arrangement according to at least one of claims 1 to 8 **characterised in that** the transmission system (2) has transmitter heads (9) which are fixedly connected to the levitation vehicle (10) and which are of a U-shaped configuration at outward sides of the levitation vehicle (10) so that the limbs of the U-shape are disposed vertically one above the other and point outwardly.

10. An arrangement according to at least one of claims 1 to 9 **characterised in that** profiles of transmitter heads (9) of parts of the transmission system (2), which are fixedly connected to the levitation vehicle (10), project into profiles of stationarily arranged parts of the transmission system (2).

11. An arrangement according to at least one of claims 1 to 10 **characterised in that** the linear motor (7) is so arranged on the transmission system (2) that the centre of gravity of the linear motor (7) and the centre of gravity of the entire transmission system (2) are always in a plane parallel to the direction of movement of the levitation vehicle (10).

12. An arrangement according to at least one of claims 1 to 11 **characterised in that** the linear motor (7) is so arranged on the levitation vehicle (10) that the centre of gravity of the linear motor (7) and the common centre of gravity of the levitation vehicle (10), parts of the transmission system (2) which are secured to the levitation vehicle (10) and a load mass are approximately in a plane parallel to a direction of movement of the levitation vehicle (10).

13. An arrangement according to at least one of claims 1 to 12 **characterised in that** an air gap plane of the magnetic levitation system (8, 8.1, 8.2, 8.3) is so integrated into the transmission system (2) that it is arranged above the centre of gravity of the transmission system (2).

14. An arrangement according to at least one of claims 1 to 13 **characterised in that** an air gap plane of the magnetic levitation system (8, 8.1, 8.2, 8.3) is so integrated into the transmission system (2) that it is arranged above the common centre of gravity of the levitation vehicle (10) and parts of the transmission system (2) and the linear motor (7), which are secured to the levitation vehicle (10).

15. An arrangement according to at least one of claims 1 to 14 **characterised in that** the magnetic levitation system (8, 8.1, 8.2, 8.3), the linear motor (7) and the energy transmitter (9) are respectively arranged in vertically superposed relationship.

16. An arrangement according to at least one of claims 1 to 15 **characterised in that** the magnetic levitation system (8, 8.1, 8.2, 8.3), the linear motor (7) and the energy transmitter (9) are respectively arranged in vertically superposed relationship, wherein the levitation system (8) is arranged above the linear motor (7).

17. An arrangement according to at least one of claims 1 to 16 **characterised in that** the parts of the levitation system (8) and the linear motor (7), which are secured to the levitation vehicle (10), are arranged in closely adjacent relationship without a mechanical spacing.

18. An arrangement according to at least one of claims 1 to 17 **characterised in that** the magnetic levitation system (8, 8.1, 8.2, 8.3), the linear motor (7) and the energy transmitter (9) are respectively arranged in vertically superposed relationship, wherein the levitation system (8) is arranged at the top, the linear motor (7) in the centre and the energy transmitter (9) at the bottom.

19. An arrangement according to at least one of claims 1 to 18 **characterised in that** in a vertical arrangement the energy transmitter (9) is arranged at the top, the magnetic levitation system (8, 8.1, 8.2, 8.3) in the centre and the linear motor (7) at the bottom, so that stationary parts of the energy transmitter (9) and the magnetic levitation system (8, 8.1, 8.2, 8.3) on the one hand and parts of the levitation system (8) and the linear motor (7), which are secured to the levitation vehicle (10), on the other hand, are arranged in closely adjacent relationship without a mechanical spacing.

20. An arrangement according to at least one of claims 1 to 19 **characterised in that** the magnetic levitation system (8, 8.1, 8.2, 8.3) has a magnet (8.1) with a yoke (8.3), with a return yoke (8.2), wherein the return yoke (8.2) is of a U-shaped cross-section, whose limbs are towards the magnet (8.1).

21. An arrangement according to at least one of claims 1 to 20 **characterised in that** the integrated transmission system (2) has a guide system (13) provided for directional control in a passive points arrangement and/or lateral guidance.

22. An arrangement according to at least one of claims 1 to 21 **characterised in that** the guide system has a pair of rollers (13), wherein the pair of rollers (13) engages into a groove which represents the U-shaped return yoke (5, 8.2).

23. An arrangement according to at least one of claims 1 to 22 **characterised in that** magnets (8.1, 8.3) of the levitation system (8) are arranged in pairs and in opposite relationship.

24. An arrangement according to claim 23 **characterised in that** a part of the levitation system (8), which is secured to the levitation vehicle (10), engages over a part of the levitation system (8), which is arranged stationarily on the rail (5).

25. An arrangement according to at least one of claims 1 to 24 **characterised in that** normal forces of the linear motor (7) are provided as support for levitation and are taken into account in air gap regulation.

26. An arrangement according to at least one of claims 1 to 25 **characterised in that** the return yoke (8.2) is so oriented in relation to the part of the levitation system (8.1, 8.3), which is secured to the levitation vehicle (10), that the magnetic flux is passed perpendicularly to the direction of travel of the levitation vehicle (10).

## Revendications

1. Dispositif pour l'actionnement d'un système de transport comportant un véhicule à sustentation magnétique (10) guidé sur des rails, un moteur linéaire (7) pour la transmission d'une puissance d'entraînement et un système de sustentation magnétique (8, 8.1, 8.2, 8.3) pour la transmission de forces de suspension et de guidage latéral, dans lequel des sous-systèmes actifs régulés du système de sustentation magnétique (8, 8.1, 8.2, 8.3) sont disposés sur ou à côté du véhicule à sustentation (10) et dans lequel on prévoit des moyens pour réguler un entrefer mécanique du système de sustentation (8, 8.1, 8.2, 8.3), **caractérisé en ce que** l'on prévoit un système de transmission d'énergie (9) pour la transmission par induction de puissance électrique, **en ce que** des sous-systèmes actifs régulés du moteur linéaire (7) sont disposés sur ou à côté du véhicule à sustentation (10), **en ce que** le système de transmission d'énergie (9) alimente en puissance électrique des sous-systèmes du système de sustentation (8, 8.1, 8.2, 8.3) et du moteur linéaire (7) qui sont disposés sur le véhicule à sustentation (10) et **en ce que** les moyens qui sont prévus pour la régulation de l'entrefer mécanique du système de sustentation (8, 8.1, 8.2, 8.3) sont prévus en même temps pour la régulation d'un entrefer mécanique du moteur linéaire (7) et/ou du système de transmission d'énergie (9).

2. Dispositif selon la revendication 1,
**caractérisé en ce que**
le système de transmission (2) est disposé sur des coins extérieurs du véhicule à sustentation (10).

3. Dispositif selon la revendication 1 ou 2,
**caractérisé en ce que**
l'on prévoit un bogie (4.1, 4.2) pour la réception du système de transmission (2).

4. Dispositif selon au moins l'une quelconque des revendications 1 à 3,
**caractérisé en ce que**
l'on prévoit une articulation (6) entre le bogie (4.1, 4.2) et une caisse de véhicule (3).

5. Dispositif selon au moins l'une quelconque des revendications 1 à 4,
**caractérisé en ce que**
le système de transmission (2) est disposé sur les côtés exposés à l'extérieur d'un bogie (4.1, 4.2) relié à une caisse de véhicule (3) du véhicule à sustentation (10).

6. Dispositif selon au moins l'une quelconque des revendications 1 à 5,
**caractérisé en ce que**
le système de transmission (2) est disposé sur deux faces frontales latérales d'un bogie (4.1, 4.2) relié à une caisse de véhicule (3) du véhicule à sustentation (10).

7. Dispositif selon au moins l'une quelconque des revendications 1 à 6,
**caractérisé en ce que**
des bogies (4.1, 4.2) sont disposés, dans la direction de la circulation, avant et après une caisse de véhicule (3) du véhicule à sustentation (10).

8. Dispositif selon au moins l'une quelconque des revendications 1 à 7,
**caractérisé en ce que**
un sous-système mobile (8.1, 8.2) du système de sustentation (8, 8.1, 8.2, 8.3) comporte deux aimants individuels indépendants et réglables pour fournir la force de suspension.

9. Dispositif selon au moins l'une quelconque des revendications 1 à 8,
**caractérisé en ce que**
le système de transmission (2) comporte des têtes de transmission (9) qui sont reliées de manière fixe au véhicule à sustentation (10) et qui sont réalisées en forme de « U » sur des faces extérieures du véhicule à sustentation (10) de telle manière que les branches de la forme en « U » sont disposées verticalement l'une au dessus de l'autre et sont dirigées vers l'extérieur.

10. Dispositif selon au moins l'une quelconque des revendications 1 à 9,
**caractérisé en ce que**
des profilés des têtes de transmission (9) de parties du système de transmission (2), qui sont reliées de manière fixe au véhicule à sustentation (10), font saillie dans des profilés de parties du système de transmission (2) qui sont disposées de manière fixe.

11. Dispositif selon au moins l'une quelconque des revendications 1 à 10,
**caractérisé en ce que**
le moteur linéaire (7) est disposé sur le système de transmission (2) de telle manière que le centre de gravité du moteur linéaire (7) et le centre de gravité de l'ensemble du système de transmission (2) se trouvent sensiblement dans un plan parallèlement à une direction de déplacement du véhicule à sustentation (10).

12. Dispositif selon au moins l'une quelconque des revendications 1 à 11,
**caractérisé en ce que**
le moteur linéaire (7) est disposé sur le véhicule à sustentation (10) de telle manière que le centre de gravité du moteur linéaire (7) et le centre de gravité commun du véhicule à sustentation (10), des parties, fixées au véhicule (10), du système de transmission (2) et d'une masse de charge, se trouvent sensiblement dans un plan parallèlement à une direction de déplacement du véhicule à sustentation (10).

13. Dispositif selon au moins l'une quelconque des revendications 1 à 12,
**caractérisé en ce que**
un plan d'entrefer du système de sustentation magnétique (8, 8.1, 8.2, 8.3) est intégré dans le système de transmission (2) de telle manière qu'il est disposé au dessus du centre de gravité du système de transmission (2).

14. Dispositif selon au moins l'une quelconque des revendications 1 à 13,
**caractérisé en ce que**
un plan d'entrefer du système de sustentation magnétique (8, 8.1, 8.2, 8.3) est intégré dans le système de transmission (2) de telle manière qu'il est disposé au dessus du centre de gravité commun du véhicule à sustentation (10), parties du système de transmission (2) et du moteur linéaire (7), qui sont fixées sur le véhicule à sustentation (10).

15. Dispositif selon au moins l'une quelconque des revendications 1 à 14,
**caractérisé en ce que**
le système de sustentation magnétique (8, 8.1, 8.2, 8.3), le moteur linéaire (7) et le dispositif transmetteur d'énergie (9) sont disposés chacun verticalement l'un au dessus de l'autre.

16. Dispositif selon au moins l'une quelconque des revendications 1 à 15,
**caractérisé en ce que**
le système de sustentation magnétique (8, 8.1, 8.2, 8.3), le moteur linéaire (7) et le dispositif transmetteur d'énergie (9) sont disposés chacun verticalement l'un au dessus de l'autre, le système de sustentation (8) étant disposé au dessus du moteur linéaire (7).

17. Dispositif selon au moins l'une quelconque des revendications 1 à 16,
**caractérisé en ce que**
les parties du système de sustentation (8) et du moteur linéaire (7), qui sont fixées sur le véhicule à sustentation (10), sont disposées de manière très proche sans distance mécanique.

18. Dispositif selon au moins l'une quelconque des revendications 1 à 17,
**caractérisé en ce que**
le système de sustentation magnétique (8, 8.1, 8.2, 8.3), le moteur linéaire (7) et le dispositif transmetteur d'énergie (9) sont disposés chacun verticalement l'un au dessus de l'autre, le système de sustentation (8) étant disposé au dessus, le moteur linéaire (7) au milieu et le dispositif transmetteur d'énergie en dessous.

19. Dispositif selon au moins l'une quelconque des revendications 1 à 18,
**caractérisé en ce que**
dans une disposition verticale, le dispositif transmetteur d'énergie (9) est disposé en haut, le système de sustentation magnétique (8, 8.1, 8.2, 8.3) au milieu et le moteur linéaire (7) au dessous de telle manière que des parties fixes du dispositif transmetteur d'énergie (9) et du système de sustentation magnétique (8, 8.1, 8.2, 8.3), d'une part, et des parties du système de sustentation (8) fixées et du moteur linéaire (7) qui sont fixées sur le véhicule à sustentation (10), d'autre part, sont disposées de manière très proche sans distance mécanique.

20. Dispositif selon au moins l'une quelconque des revendications 1 à 19,
**caractérisé en ce que**
le système de sustentation magnétique (8, 8.1, 8.2, 8.3) comporte un aimant (8.1) avec une culasse (8.3) comportant une culasse de retour (8.2), la culasse de retour (8.2) présentant une section transversale en forme de « U » dont les branches font face à l'aimant (8.1).

21. Dispositif selon au moins l'une quelconque des revendications 1 à 20,
**caractérisé en ce que**
le système de transmission (2) intégré comporte un système de guidage (13) qui est prévu pour la commande de direction dans un aiguillage passif ou un guidage latéral.

22. Dispositif selon au moins l'une quelconque des revendications 1 à 21,
**caractérisé en ce que**
le système de guidage comporte une paire de rouleaux (13), la paire de rouleaux (13) s'accrochant dans une encoche qui constitue la culasse de retour en forme de « U » (5, 8.2).

23. Dispositif selon au moins l'une quelconque des revendications 1 à 22,
**caractérisé en ce que**
des aimants (8.1, 8.3) du système de sustentation (8) sont dis posées par paires et en étant opposés.

24. Dispositif selon au moins l'une quelconque des revendications 1 à 23,
**caractérisé en ce que**
une partie du système de sustentation (8) qui est fixée sur le véhicule à sustentation (10) s'accroche dans une partie du système de sustentation (8) qui est disposée de manière fixe sur le rail (5).

25. Dispositif selon au moins l'une quelconque des revendications 1 à 24,
**caractérisé en ce que**
des forces normales du moteur linéaire (7) en tant que support pour la suspension sont prévues et sont prises en compte lors de la régulation de l'entrefer.

26. Dispositif selon au moins l'une quelconque des revendications 1 à 25,
**caractérisé en ce que**
la culasse de retour (8.2) est dirigée vers une partie du système de sustentation (8.1, 8.3) qui est fixée sur le véhicule à sustentation (10) de telle manière que le flux magnétique est guidé perpendiculairement à la direction de la circulation du véhicule à sustentation (10).
